# EUROPEAN PATENT APPLICATION

(11) **EP 2 143 892 A1**
(43) Date of publication of application: **13.01.2010**
(21) Application number: 08752135.7
(22) Date of filing: 25.04.2008
(51) Int. Cl.: F01K 23/10, F02C 6/18

(54) **STEAM TURBINE OPERATION CONTROL DEVICE**

(30) Priority: 27.04.2007 JP 2007117975
(71) Applicant: Mitsubishi Heavy Industries, Ltd., Tokyo 108-8215 (JP)
(72) Inventor: YAMAMOTO, Keisuke, Takasago-shi Hyogo 676-8686 (JP); SONODA, Takashi, Takasago-shi Hyogo 676-8686 (JP); UJIIE, Naoki, Takasago-shi Hyogo 676-8686 (JP); NAKAMURA, Shinsuke, Takasago-shi Hyogo 676-8686 (JP)
(74) Representative: Intes, Didier Gérard André
(86) International application number: PCT/JP2008/058101
(87) International publication number: WO 2008/136425

(57) **Abstract**

A steam-turbine operation control apparatus having high followability with respect to a change in the required electricity generation amount while preventing an excessive load from being imposed on a gas turbine is provided. In a combined power plant (1) which includes a gas turbine (3), an exhaust heat recovery boiler (5) for generating steam by recovering heat from exhaust gas of the gas turbine (3), and a steam turbine (6) driven by using the steam generated by the exhaust heat recovery boiler (5), the steam-turbine operation control apparatus (30) controls the operation of the steam turbine (6) by controlling the degree of opening of a steam control valve (22) which adjusts the amount of steam to be taken into the steam turbine (6). When the load of the gas turbine (3) falls in a high load region specified in advance and the amount of a change in an electricity generation amount required for the combined power plant (1) is larger than a predetermined threshold, the degree of opening of the steam control valve (22) is reduced, and then, the degree of opening of the steam control valve (22) is increased.

## Description

### Technical Field

The present invention relates to steam-turbine operation control apparatuses used in combined power plants.

### Background Art

A gas turbine combined cycle (GTCC) in which gas turbine equipment and steam turbine equipment are combined has been conventionally known (for example, see Patent Document 1).
In a combined power plant, a gas turbine is driven to generate electricity; and an exhaust heat recovery boiler recovers heat energy held by exhaust gas of the gas turbine to generate steam, and this steam drives a steam turbine to generate electricity. Since the heat energy held by the exhaust gas of the gas turbine is recovered to generate electricity, the plant efficiency can be improved.
Patent Document 1:
   Japanese Unexamined Patent Application, Publication No. 2004-176681

### Disclosure of Invention

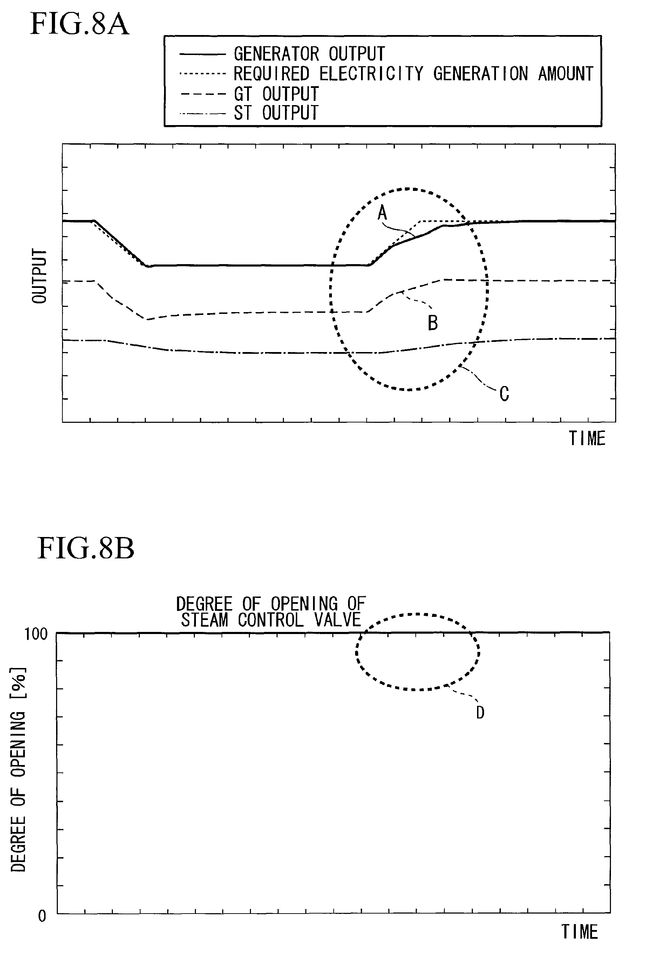

In conventional combined power plants, after the gas turbine and the steam turbine are activated, it is common to control only the degree of opening of a fuel control valve of the gas turbine, with a steam control valve of the steam turbine being fully opened. Specifically, as shown in FIG. 8B, since the degree of opening of the steam control valve is not controlled according to a change in the required electricity generation amount (reference symbol D), the output of the steam turbine is maintained without any control (reference symbol C). This improves the efficiency of the combined power plants.
As described above, in the conventional combined power plants, the degree of opening of the fuel control valve is controlled according to the required electricity generation amount, thereby changing the output of the gas turbine and causing an electricity generation amount of the entire plant to follow the required electricity generation amount.

However, in a case where the required electricity generation amount is rapidly changed if the gas turbine has a high load, when the output of the gas turbine is rapidly changed accordingly, the load of the gas turbine is increased. As a result, the lifetime of the gas turbine may be shortened. This phenomenon frequently occurs particularly when the gas turbine has a high load. Therefore, in order to prevent an excessive load from being imposed on the gas turbine, it is necessary to put a limit on the rate of change of output of the gas turbine in a high-load region in which the load of the gas turbine exceeds 90% of the rated output, for example (reference symbol B).

However, when such control is performed, if the required electricity generation amount is rapidly changed in the high-load region, the output of the gas turbine cannot follow the required electricity generation amount as shown in FIG. 8A.
As a result, followability with respect to the required electricity generation amount is reduced (reference symbol A).

The present invention has been made to solve the above-mentioned problems, and an object of the present invention is to provide a steam-turbine operation control apparatus having high followability with respect to a change in the required electricity generation amount while preventing an excessive load from being imposed on the gas turbine.

In order to solve those problems, the present invention employs the following solutions.
According to the present invention, there is provided a steam-turbine operation control apparatus used in a combined power plant which includes a gas turbine, an exhaust heat recovery boiler for generating steam by recovering heat from exhaust gas of the gas turbine, and a steam turbine driven by using the steam generated by the exhaust heat recovery boiler, the steam-turbine operation control apparatus controlling an operation of the steam turbine by controlling the degree of opening of a steam control valve which adjusts the amount of steam to be taken into the steam turbine, in which, when a load of the gas turbine falls in a high load region specified in advance and the amount of a change in an electricity generation amount required for the combined power plant is larger than a predetermined threshold, the degree of opening of the steam control valve is reduced, and then, the degree of opening of the steam control valve is increased.

According to this steam-turbine operation control apparatus, the degree of opening of the steam control valve is reduced, thus temporarily storing energy in the exhaust heat recovery boiler, and then, the degree of opening of the steam control valve is increased, thus converting the stored energy into electricity in the steam turbine. Therefore, the output of the steam turbine can be efficiently increased. Thus, it is possible to improve the followability with respect to a change in the required electricity generation amount without rapidly changing the output of the gas turbine. As a result, it is possible to follow a change in the required electricity generation amount while preventing an excessive load from being imposed on the gas turbine.
Further, the amount of energy to be stored in the exhaust heat recovery boiler is mainly determined by the degree of opening of the steam control valve and by the time period during which this degree of opening is maintained. Therefore, when the degree of opening of the steam control valve is appropriately set, the followability with respect to the required electricity generation amount can be further improved.

In the steam-turbine operation control apparatus according to the present invention, when a predetermined time period has elapsed after the degree of opening of the steam control valve is reduced, the degree of opening of the steam control valve may be increased.

According to this steam-turbine operation control apparatus, the timing to increase the degree of opening of the steam control valve is determined by the specified time, and therefore, the degree of opening can be easily controlled.

In the steam-turbine operation control apparatus according to the present invention, when the degree of opening of the steam control valve is reduced and then the load of the gas turbine becomes equal to or larger than a first threshold specified in the high load region, the degree of opening of the steam control valve may be increased.

According to this steam-turbine operation control apparatus, since the steam control valve is controlled according to the load of the gas turbine, the steam turbine can be controlled with the operation state of the gas turbine being taken into account. Thus, it is possible to flexibly comply with a change in the required electricity generation amount.

In the steam-turbine operation control apparatus according to the present invention, when the degree of opening of the steam control valve is reduced and then a rate of change of output of the combined power plant becomes equal to or lower than a predetermined rate of change of output, the degree of opening of the steam control valve may be increased.

According to this steam-turbine operation control apparatus, since the steam control valve is controlled according to a rate of change of output of the combined power plant, it is possible to flexibly comply with a change in the required electricity generation amount.

According to the steam-turbine operation control apparatus of the present invention, it is possible to follow a change in the required electricity generation amount while preventing an excessive load from being imposed on the gas turbine.

### Brief Description of Drawings

[FIG. 1] FIG. 1 shows a schematic configuration of an entire combined power plant (with multiple shafts) according to each embodiment of the present invention.
[FIG. 2] FIG. 2 is a control block diagram of a steam-turbine operation control apparatus according to a first embodiment of the present invention.
[FIG. 3A] FIG. 3A is a graph showing the followability of outputs with respect to the required electricity generation amount, in the steam-turbine operation control apparatus of FIG. 2.
[FIG. 3B] FIG. 3B is a graph showing the followability of the degree of opening of a steam control valve with respect to the required electricity generation amount, in the steam-turbine operation control apparatus of FIG. 2.
[FIG. 4] FIG. 4 is a control block diagram of a steam-turbine operation control apparatus according to a second embodiment of the present invention.
[FIG. 5A] FIG. 5A is a graph showing the followability of outputs with respect to the required electricity generation amount, in the steam-turbine operation control apparatus of FIG. 4.
[FIG. 5B] FIG. 5B is a graph showing the followability of the degree of opening of a steam control valve with respect to the required electricity generation amount, in the steam-turbine operation control apparatus of FIG. 4.
[FIG. 6] FIG. 6 is a control block diagram of a steam-turbine operation control apparatus according to a third embodiment of the present invention.
[FIG. 7A] FIG. 7A is a graph showing the followability of outputs with respect to the required electricity generation amount, in the steam-turbine operation control apparatus of FIG. 6.
[FIG. 7B] FIG. 7B is a graph showing the followability of the degree of opening of a steam control valve with respect to the required electricity generation amount, in the steam-turbine operation control apparatus of FIG. 6.
[FIG. 8A] FIG. 8A is a graph showing the followability of outputs with respect to the required electricity generation amount, in a conventional steam-turbine operation control apparatus.
[FIG. 8B] FIG. 8B is a graph showing the followability of the degree of opening of a steam control valve with respect to the required electricity generation amount, in the conventional steam-turbine operation control apparatus.

### Explanation of Reference Signs:

- 1:: combined power plant
- 3:: gas turbine
- 5:: exhaust heat recovery boiler
- 6:: steam turbine
- 22:: steam control valve
- 30,: 30a, 30b, 30c: steam-turbine operation control apparatus

### Best Mode for Carrying Out the Invention

### [First Embodiment]

A steam-turbine operation control apparatus according to a first embodiment of the present invention will be described below with reference to the drawings.
First, a device configuration of a gas turbine combined cycle according to this embodiment will be described.

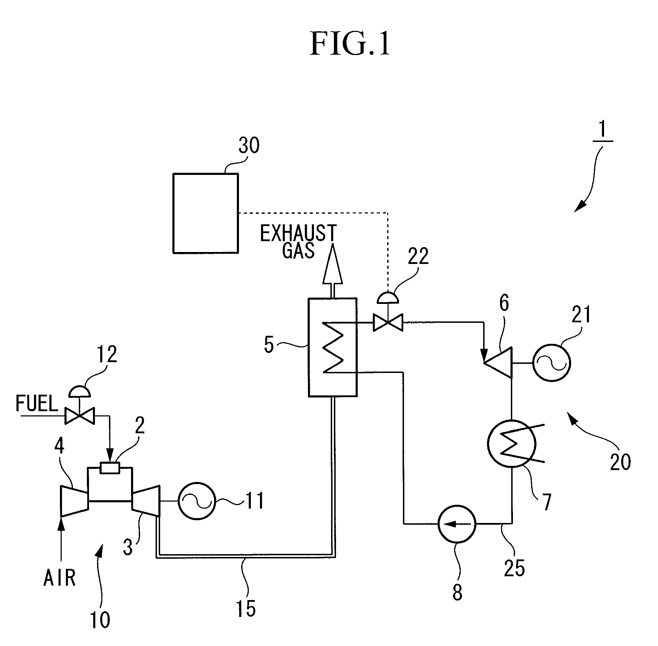

FIG. 1 shows a schematic configuration of the entire gas turbine combined cycle according to this embodiment.
As shown in FIG. 1, a combined power plant 1 includes a gas turbine unit 10 and a steam turbine unit 20 as main components. A gas turbine and a steam turbine shown in FIG. 1 are configured to have separate shafts, but may be configured to have the same shaft. In that case, one of generators 11 and 21 is used.

The gas turbine unit 10 includes a combustor 2 which burns gas, a gas turbine 3 which uses combustion gas to rotate a turbine, a compressor 4 which compresses air, and the generator 11 coupled to the gas turbine 3. A fuel control valve 12 which adjusts the amount of fuel is provided at the upstream side of the combustor 2.
The steam turbine unit 20 includes an exhaust heat recovery boiler 5 which performs heat recovery from exhaust gas, a steam turbine 6 which uses steam to rotate a turbine, a condenser 7 which condenses steam into liquid, a feed water pump 8 which conveys the liquid under pressure, and the generator 21 coupled to the steam turbine 6 (when the same shaft is used, the generator 21 is not provided but only the generator 11 is provided). The exhaust heat recovery boiler 5, the steam turbine 6, the condenser 7, and the feed water pump 8 are connected by water supply pipes 25, in the order of the circulation of steam or liquid. A steam control valve 22 is provided between the exhaust heat recovery boiler 5 and the steam turbine 6. The steam control valve 22 is controlled by a steam-turbine operation control apparatus 30.
The gas turbine 3 and the exhaust heat recovery boiler 5 are connected by an exhaust gas pipe 15.

Next, the operations of the individual devices in the combined power plant 1, having the above-described configuration, will be described below.
The compressor 4 compresses air taken in from the outside and supplies the compressed air to the combustor 2. Fuel is also supplied to the combustor 2 when the fuel control valve 12 is opened. The combustor 2 mixes and burns the compressed air and the fuel, which are thus supplied, and supplies high-temperature combustion gas to the gas turbine 3. The combustion gas supplied from the combustor 2 rotates the gas turbine 3 to drive the generator 11.

Exhaust gas from the gas turbine 3 is supplied to the exhaust heat recovery boiler 5 and is used as a heat source to generate steam. The generated steam is supplied to the steam turbine 6 when the steam control valve 22 is opened in response to a command sent from the steam-turbine operation control apparatus 30. This steam is used to rotate the steam turbine 6 to drive the generator 21. Note that, after being used as a heat source in the exhaust heat recovery boiler 5, the exhaust gas is discharged to the atmosphere from an exhaust port (not shown).

The steam that was used to rotate the steam turbine 6 is condensed back into liquid by the condenser 7, located at a lower portion of the steam turbine 6. The liquid is supplied by the feed water pump 8 to the exhaust heat recovery boiler 5, and is turned into steam again to be used to rotate the steam turbine 6.

As described above, in the combined power plant 1, the generator 11 and the generator 21 are driven to generate electricity. When the same shaft is used, either the generator 11 or the generator 21 is driven to generate electricity.

Next, details of control of a steam-turbine operation control apparatus 30a will be described below.

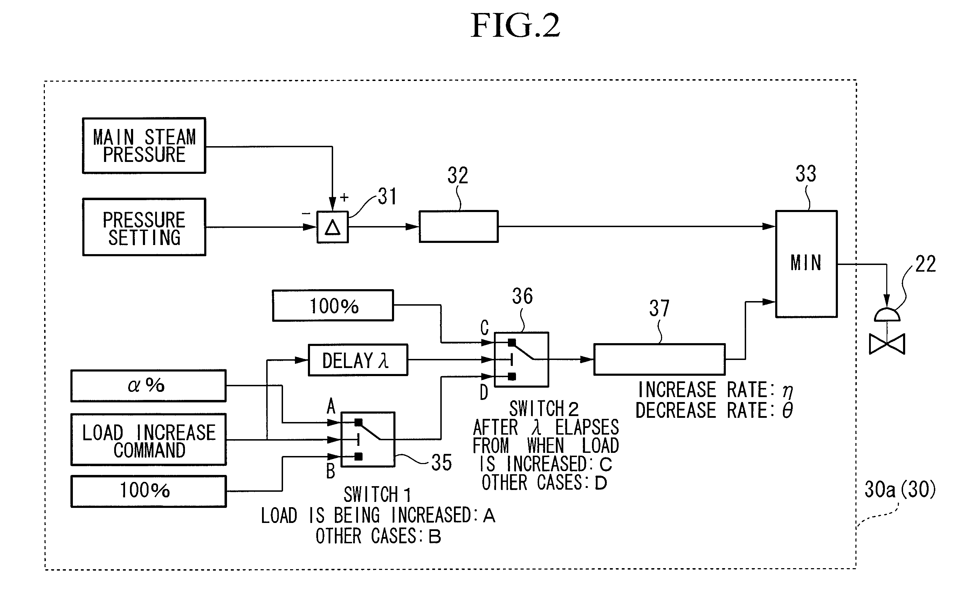

FIG. 2 is a control block diagram of the steam-turbine operation control apparatus 30a according to this embodiment.
In FIG. 2, a main steam pressure from a pressure measurement instrument (not shown) and a steam pressure setting value which is specified in advance are input to a subtractor 31. The subtractor 31 applies a subtraction operation to the main steam pressure and the pressure setting value, and outputs the difference value to a controller 32. The controller 32 calculates a degree-of-opening command value for the steam control valve 22 based on the received difference value, and outputs the degree-of-opening command value to a comparator 33.

When the signal of a load increase command for the combined power plant 1 is input, specifically, when the amount of a change in the required electricity generation amount becomes larger than a given threshold specified in advance, a first selection part 35 selects α% specified in advance as a degree-of-opening command value for the steam control valve 22. In the other cases, the first selection part 35 selects 100%. The first selection part 35 outputs the selected degree-of-opening command value for the steam control valve 22 to a second selection part 36.

If a time period λ specified in advance has elapsed after the signal of the load increase command for the combined power plant 1 is input, the second selection part 36 selects 100% as a degree-of-opening command value for the steam control valve 22. If λ has not elapsed, the second selection part 36 selects the output value received from the first selection part 35. Then, the second selection part 36 outputs the selected degree-of-opening command value to a rate limiter 37.

To increase the degree of opening of the steam control valve 22, the rate limiter 37 outputs the output value received from the second selection part 36 to the comparator 33 at an increase rate η. To reduce the degree of opening of the steam control valve 22, the rate limiter 37 outputs the output value received from the second selection part 36 to the comparator 33 at a decrease rate θ.

The comparator 33 compares the output value received from the controller 32 with the output value received from the rate limiter 37 and outputs the smaller value to the steam control valve 22 as a degree-of-opening command value.

In the steam-turbine operation control apparatus 30a having the above-described configuration, in response to a change in the required electricity generation amount, the degree of opening of the steam control valve 22 is controlled as follows.
First, the deviation of a main steam pressure from the pressure setting value is calculated by the subtractor 31, and is output to the controller 32. The controller 32 generates a degree-of-opening command value corresponding to the deviation and outputs the degree-of-opening command value to the comparator 33. Thus, the degree-of-opening command value output from the controller 32 corresponds to the main steam pressure. After the main steam pressure becomes stable, the degree-of-opening command value is fixed to 100%.

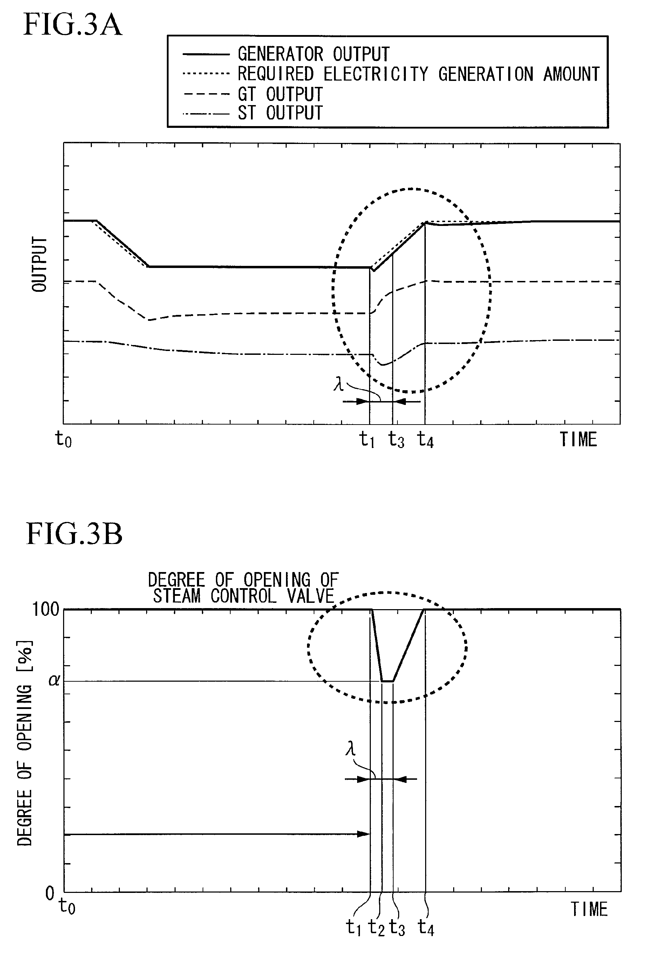

On the other hand, when a load increase command is not input to the first selection part 35, the first selection part 35 selects a degree-of-opening command value of 100% and outputs this degree-of-opening command value to the second selection part 36. The second selection part 36 outputs the degree-of-opening command value of 100% given by the first selection part 35 to the rate limiter 37. The rate limiter 37 outputs 100% to the comparator 33 at the predetermined rate η. Thus, the degree-of-opening command value output from the rate limiter 37 is increased at the predetermined rate η, and is eventually fixed to 100%.
The comparator 33 compares the degree-of-opening command value received from the controller 32 with the degree-of-opening command value received from the rate limiter 37 and outputs the smaller value to the steam control valve 22 as a degree-of-opening command value. Thus, the degree-of-opening command value output to the steam control valve 22 is eventually fixed to 100% (see the time period from t₀ to t₁ shown FIG. 3B).

Next, when a load increase command is input to the first selection part 35 at time t₁, the first selection part 35 selects α% as a degree-of-opening command value and outputs it to the second selection part 36. The second selection part 36 selects the degree-of-opening command value α% received from the first selection part 35 during the time period λ from when the load increase command is input to the first selection part 35, and outputs the selected degree-of-opening command value to the rate limiter 37. The rate limiter 37 outputs the degree-of-opening command value α% received from the second selection part 36 to the comparator 33 at the decrease rate θ. Thus, a degree-of-opening command value selected by the comparator 33 and output to the steam control valve 22 is reduced to α% at the decrease rate θ (see the time period from time t₁ to t₂ shown FIG. 3B), and is fixed when it reaches α% (see the time period from time t₂ to t₃ shown FIG. 3B).

Then, if λ has elapsed after the load increase command is input, the second selection part 36 selects a degree-of-opening command value 100%, and the rate limiter 37 outputs the degree-of-opening command value to the comparator 33 at the increase rate η. Thus, a degree-of-opening command value selected by the comparator 33 and output to the steam control valve 22 is increased to 100% at the increase rate η and is fixed when it reaches 100% (see the time period from time t₃ to t₄ shown FIG. 3B).

After the degree of opening of the steam control valve 22 reaches 100%, the degree of opening of the steam control valve 22 is kept at 100% until the next load increase command for the required electricity generation amount is input (see after time t₄ shown FIG. 3B).

FIG. 3A shows the followability with respect to a change in the required electricity generation amount, obtained when the above-described control is performed. FIG. 3A shows the relationship between time and the output of the entire combined power plant 1 and the outputs of the individual devices, when the required electricity generation amount is changed. In FIG. 3A, "ST" indicates the steam turbine 6 and "GT" indicates the gas turbine 3.
When a change in the required electricity generation amount occurs at time t₁, the output of the gas turbine 3 is increased in order to follow the required electricity generation amount. On the other hand, the output of the steam turbine 6 is temporarily reduced because the degree of opening of the steam control valve 22 is reduced. During this time period, energy is temporarily stored in the exhaust heat recovery boiler 5.
Then, the degree of opening of the steam control valve 22 is gradually increased at time t₃ when the time period λ has elapsed from time t₁, thereby increasing the output of the steam turbine 6. Accordingly, a rate of change of output of the gas turbine 3 is reduced, and the output of the entire combined power plant 1 follows the required electricity generation amount.

As described above, with the steam-turbine operation control apparatus 30a according to this embodiment, the degree of opening of the steam control valve 22 is reduced during the time period from time t₁ to time t₃, thereby allowing energy to be temporarily stored in the exhaust heat recovery boiler 5. Then, the degree of opening of the steam control valve 22 is increased during the time period from time t₃ to time t₄, and the stored energy is thus converted into electricity by the steam turbine 6. Therefore, the output of the steam turbine 6 can be efficiently increased. In this way, it is possible to improve the followability with respect to a change in the required electricity generation amount without rapidly changing the output of the gas turbine 3. As a result, it is possible to follow a change in the required electricity generation amount while preventing an excessive load from being imposed on the gas turbine 3.
Since the timing to increase the degree of opening of the steam control valve 22 is determined by the specified time, the degree of opening can be easily controlled.
Further, the amount of energy to be stored in the exhaust heat recovery boiler 5 is mainly determined by the degree of opening of the steam control valve 22 and by the time period during which this degree of opening is kept. Therefore, when the degree of opening α of the steam control valve 22 is appropriately set, the followability with respect to the required electricity generation amount can be further improved.

### [Second Embodiment]

Next, a second embodiment of the present invention will be described below.
A steam-turbine operation control apparatus of this embodiment is different from that of the first embodiment in that, after the degree of opening of the steam control valve 22 is reduced, when the load of the gas turbine 3 becomes equal to or larger than a first threshold specified in a high load region, the degree of opening of the steam control valve 22 is increased. A description will be given below mainly of the differences from the first embodiment, and a description of similarities will be omitted.

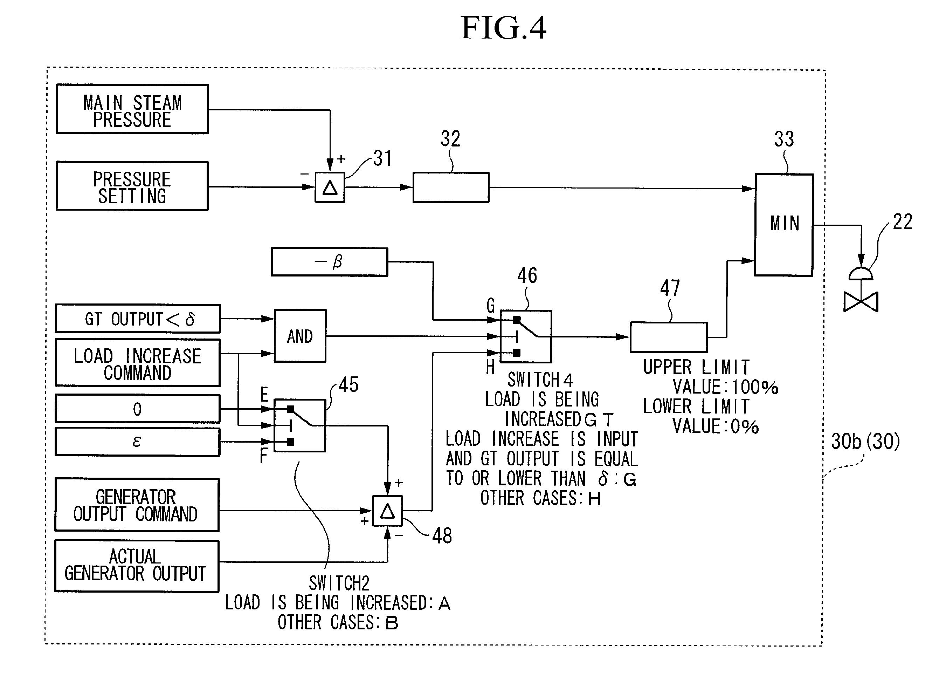

FIG. 4 is a control block diagram of a steam-turbine operation control apparatus 30b according to this embodiment.
A first selection part 45 selects 0 as a degree-of-opening correction value for the steam control valve 22 when the signal of a load increase command for the combined power plant 1 is input, and otherwise selects ε, and then outputs the selected degree-of-opening correction value to a calculation part 48. Here, ε is a degree-of-opening correction value specified in advance such that the degree of opening of the steam control valve 22 becomes 100%.

The calculation part 48 subtracts an actual output value from the output command value of the entire combined power plant 1, and then adds the degree-of-opening correction value selected by the first selection part 45 to the difference value. Then, the calculation part 48 outputs the thus calculated value to a second selection part 46.

When the second selection part 46 detects the signal of a load increase command for the combined power plant 1, and the output of the gas turbine 3 is lower than a first threshold δ specified in advance, the second selection part 46 selects an output value β specified in advance. In the other cases, the second selection part 46 selects the value given by the calculation part 48. The second selection part 46 outputs the selected value to a controller 47.

The controller 47 generates a degree-of-opening command value for the steam control valve 22 based on the value given by the second selection part 46 and outputs it to the comparator 33.

The comparator 33 compares an output value received from the controller 32 with the output value received from the controller 47 and outputs the smaller value to the steam control valve 22 as a degree-of-opening command value for the steam control valve 22.

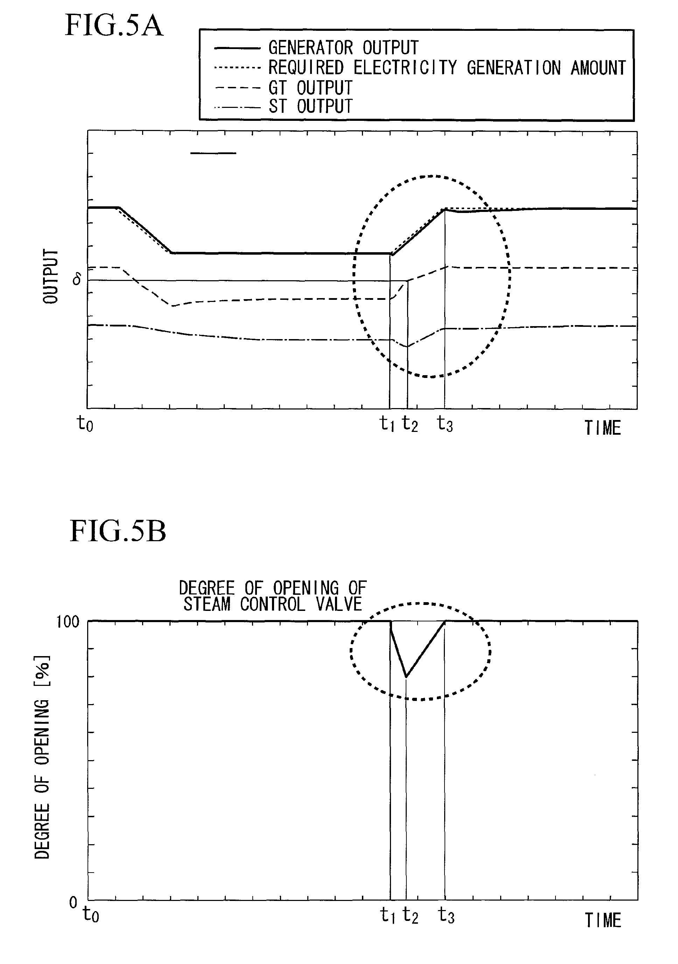

In the steam-turbine operation control apparatus 30b having the above-described configuration, in response to a change in the required electricity generation amount, the degree of opening of the steam control valve 22 is controlled as follows.
First, when a load increase command is not input to the first selection part 45, the first selection part 45 selects ε as a degree-of-opening correction value and outputs this degree-of-opening correction value to the calculation part 48. The calculation part 48 outputs to the second selection part 46 a value obtained by adding ε to the deviation of an actual output value from the output command value of the entire combined power plant 1. The second selection part 46 outputs the value given by the calculation part 48 to the controller 47. The controller 47 generates a degree-of-opening command value corresponding to the output value received from the second selection part 46 and outputs this degree-of-opening command value to the comparator 33.
The comparator 33 compares a degree-of-opening command value received from the controller 32 with the degree-of-opening command value received from the controller 47 and outputs the smaller value to the steam control valve 22 as a degree-of-opening command value. Since the degree-of-opening correction value ε is specified such that the degree of opening of the steam control valve 22 becomes 100%, the degree-of-opening command value output to the steam control valve 22 is eventually fixed to 100% (see the time period from to to t₁ shown FIG. 5B).

Next, when a load increase command is input to the first selection part 45 at time t₁, the first selection part 45 selects 0 as a degree-of-opening correction value and outputs the degree-of-opening correction value to the calculation part 48. Therefore, the calculation part 48 outputs the deviation of an actual output value from the output command value of the entire combined power plant 1 to the second selection part 46. When the load increase command is input to the second selection part 46 and the load of the gas turbine 3 is lower than the first threshold δ, the second selection part 46 outputs the output value β specified in advance to the controller 47. The controller 47 generates a degree-of-opening command value corresponding to the output value received from second selection part 46 and outputs this degree-of-opening command value to the comparator 33. Thus, the degree-of-opening command value selected by the comparator 33 and output to the steam control valve 22 is reduced to the degree of opening corresponding to the output value β (see the time period from time t₁ to t₂ shown FIG. 5B).

When the load of the gas turbine 3 becomes equal to or larger than the first threshold δ, the second selection part 46 selects the value given by the calculation part 48. Therefore, the controller 47 outputs to the comparator 33 the degree-of-opening command value generated based on the deviation of an actual output value from the output command value of the entire combined power plant 1. Thus, the degree-of-opening command value selected by the comparator 33 and output to the steam control valve 22 is increased according to the output of the combined power plant 1 and is fixed when it reaches 100% (see the time period from time t₂ to t₃ shown FIG. 5B).

After the degree of opening of the steam control valve 22 reaches 100%, the degree of opening of the steam control valve 22 is kept at 100% until the next load increase command for the required electricity generation amount is input (see after time t₃ shown FIG. 5B).

FIG. 5A shows the followability with respect to a change in the required electricity generation amount, obtained when the above-described control is performed.
When a change in the required electricity generation amount occurs at time t₁, the output of the gas turbine 3 is increased in order to follow the required electricity generation amount. On the other hand, the output of the steam turbine 6 is temporarily reduced because the degree of opening of the steam control valve 22 is reduced. During this time period, energy is temporarily stored in the exhaust heat recovery boiler 5.
Then, the degree of opening of the steam control valve 22 is gradually increased at time t₂ when the output of the gas turbine 3 reaches the first threshold δ, thereby increasing the output of the steam turbine 6. Accordingly, the rate of change of output of the gas turbine 3 is reduced, and the output of the entire combined power plant 1 follows the required electricity generation amount.

As described above, with the steam-turbine operation control apparatus 30b according to this embodiment, since the steam control valve 22 is controlled according to the load of the gas turbine 3, the steam turbine 6 can be controlled with the operation state of the gas turbine 3 being taken into account. Thus, it is possible to flexibly comply with a change in the required electricity generation amount.

### [Third Embodiment]

Next, a third embodiment of the present invention will be described below.
A steam-turbine operation control apparatus of this embodiment is different from that of the second embodiment in that, after the degree of opening of the steam control valve 22 is reduced, when the rate of change of output of the combined power plant 1 becomes equal to or lower than a predetermined rate of change of output, the degree of opening of the steam control valve 22 is increased. A description will be given below mainly of the differences from the second embodiment, and a description of similarities will be omitted.

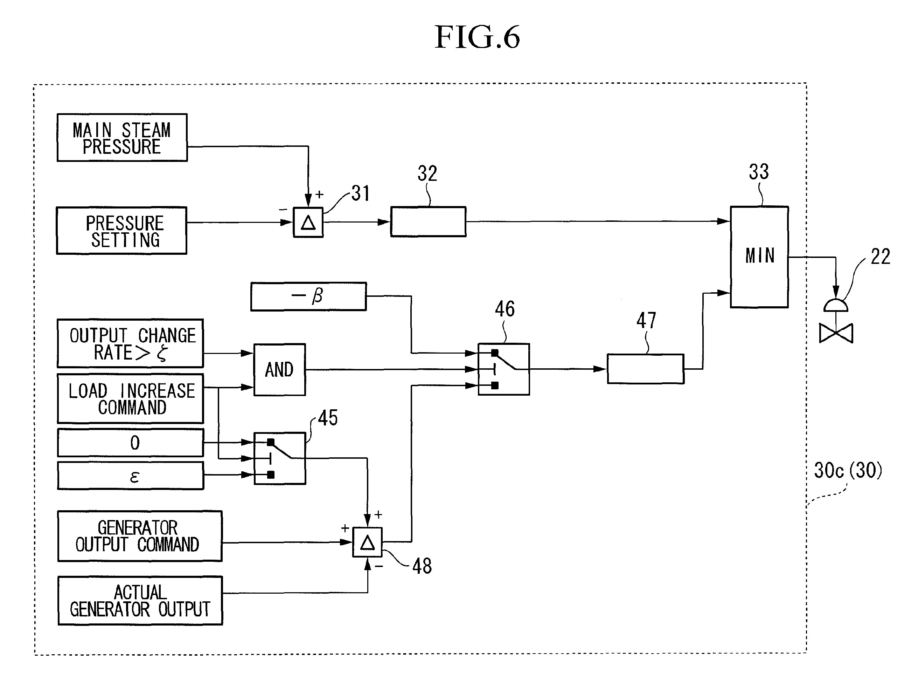

FIG. 6 is a control block diagram of a steam-turbine operation control apparatus 30c according to this embodiment.
When the second selection part 46 detects the signal of a load increase command for the combined power plant 1, and the rate of change of output of the combined power plant 1 is larger than the predetermined rate of change of output, the second selection part 46 selects the output value β specified in advance. In the other cases, the second selection part 46 selects an output value received from the calculation part 48. The second selection part 46 outputs the selected value to the controller 47.

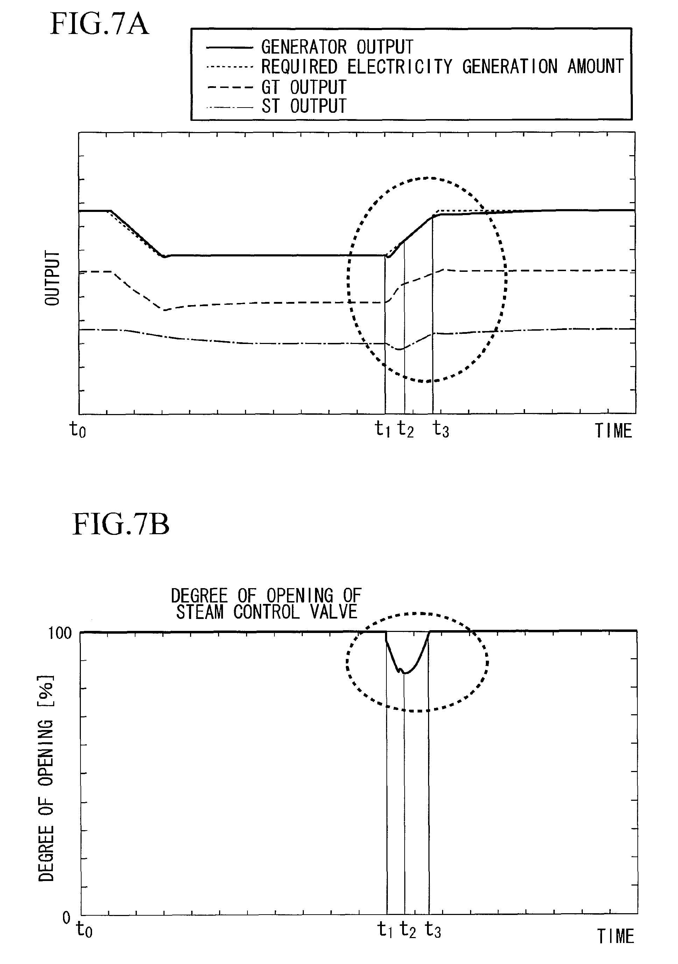

In the steam-turbine operation control apparatus 30c, in response to a change in the required electricity generation amount, the degree of opening of the steam control valve 22 is controlled as follows.
First, the comparator 33 compares a degree-of-opening command value received from the controller 32 with a degree-of-opening command value received from the controller 47 and outputs the smaller value to the steam control valve 22 as a degree-of-opening command value. Since the degree-of-opening correction value ε is specified such that the degree of opening of the steam control valve 22 becomes 100%, the degree-of-opening command value output to the steam control valve 22 is eventually fixed to 100% (see the time period from to to t₁ shown FIG. 7B).

Next, when a load increase command is input to the second selection part 46 at time t₁, and the rate of change of output of the combined power plant 1 is larger than the predetermined rate of change of output, the output value β specified in advance is output to the controller 47. The controller 47 generates a degree-of-opening command value corresponding to the output value received from the second selection part 46 and outputs this degree-of-opening command value to the comparator 33. Thus, the degree-of-opening command value selected by the comparator 33 and output to the steam control valve 22 is reduced to the degree of opening generated based on the output value β (see the time period from time t₁ to t₂ shown FIG. 7B).

Then, when the rate of change of output of the combined power plant 1 becomes equal to or lower than the predetermined rate of change of output, the second selection part 46 selects a value given by the calculation part 48. Thus, the controller 47 outputs to the comparator 33 the degree-of-opening command value generated based on the deviation of an actual output value from the output command value of the entire combined power plant 1. Thus, the degree-of-opening command value selected by the comparator 33 and output to the steam control valve 22 is increased according to the output of the combined power plant 1 and is fixed when it reaches 100% (see the time period from time t₂ to t₃ shown FIG. 7B).

After the degree of opening of the steam control valve 22 reaches 100%, the degree of opening of the steam control valve 22 is kept at 100% until the next load increase command for the required electricity generation amount is input (see after time t₃ shown FIG. 7B).

FIG. 7A shows the followability with respect to a change in the required electricity generation amount, obtained when the above-described control is performed.
When a change in the required electricity generation amount occurs at time t₁, the output of the gas turbine 3 is increased in order to follow the required electricity generation amount. On the other hand, the output of the steam turbine 6 is temporarily reduced because the degree of opening of the steam control valve 22 is reduced. During this time period, energy is temporarily stored in the exhaust heat recovery boiler 5.
Then, the degree of opening of the steam control valve 22 is gradually increased at time t₂ when the rate of change of output of the combined power plant 1 reaches the predetermined rate of change of output, thereby increasing the output of the steam turbine 6. Accordingly, the rate of change of output of the gas turbine 3 is reduced, and the output of the entire combined power plant 1 follows the required electricity generation amount.

As described above, with the steam-turbine operation control apparatus 30c according to this embodiment, since the steam control valve 22 is controlled according to the rate of change of output of the combined power plant 1, it is possible to flexibly comply with a change in the required electricity generation amount.

## Claims

1. A steam-turbine operation control apparatus used in a combined power plant which includes a gas turbine, an exhaust heat recovery boiler for generating steam by recovering heat from exhaust gas of the gas turbine, and a steam turbine driven by using the steam generated by the exhaust heat recovery boiler, the steam-turbine operation control apparatus controlling an operation of the steam turbine by controlling the degree of opening of a steam control valve which adjusts the amount of steam to be taken into the steam turbine,
wherein, when a load of the gas turbine falls in a high load region specified in advance and the amount of a change in an electricity generation amount required for the combined power plant is larger than a predetermined threshold, the degree of opening of the steam control valve is reduced, and then, the degree of opening of the steam control valve is increased.

2. A steam-turbine operation control apparatus according to claim 1, wherein, when a predetermined time period has elapsed after the degree of opening of the steam control valve is reduced, the degree of opening of the steam control valve is increased.

3. A steam-turbine operation control apparatus according to claim 1, wherein, when the degree of opening of the steam control valve is reduced and then the load of the gas turbine becomes equal to or larger than a first threshold specified in the high load region, the degree of opening of the steam control valve is increased.

4. A steam-turbine operation control apparatus according to claim 1, wherein, when the degree of opening of the steam control valve is reduced and then a rate of change of output of the combined power plant becomes equal to or lower than a predetermined rate of change of output, the degree of opening of the steam control valve is increased.
